# EUROPEAN PATENT SPECIFICATION

(11) **EP 1 980 156 B1**
(45) Date of publication and mention of the grant of the patent: **06.06.2012**
(21) Application number: 07121338.3
(22) Date of filing: 22.11.2007
(51) Int. Cl.: A23G 9/08, A23G 9/30, A23L 3/16, F25B 13/00, F25B 29/00

(54) **A method for pasteurising and restoring the refrigerant cycle in a freezing machine for making crushed-ice drinks and the like and a machine for implementing the method**
Verfahren zur Pasteurisierung und Wiederherstellung des Kühlzyklus in einer Gefriermaschine zur Herstellung von Drinks mit zerkleinertem Eis oder Ähnliches und Maschine zur Umsetzung des Verfahrens
Procédé de pasteurisation et de restauration du cycle réfrigérant dans un appareil de congélation pour fabriquer des boissons à base de glace pilée et similaires et machine pour mettre en oeuvre le procédé

(30) Priority: 30.11.2006 IT BO20060815
(43) Date of publication of application: 15.10.2008
(73) Proprietor: ALI S.p.A, 20123 Milano (IT)
(72) Inventor: COCCHI, Gino, 40137 Bologna (IT); ZANIBONI, Gianni, 40037 Borgonuovo di Sasso Marconi (Bologna) (IT); LAZZARINI, Roberto, 42100 Reggio Emilia (IT)
(74) Representative: Bianciardi, Ezio

(56) References cited:
- EP-A- 0 059 329
- US-A- 3 196 627
- US-A- 4 476 146
- US-A- 4 607 494
- US-A- 4 706 473

## Description

The present invention relates to a method for pasteurising and restoring the refrigerant cycle in a freezing machine for making crushed-ice drinks and a machine for implementing the method.

As is known, a machine of the above-mentioned type comprises a freezing chamber consisting of a tank for containing a food mixture, usually consisting of a syrup and water or milk, the tank housing a refrigerant cylinder equipped with dispenser means at one end.

Mounted around the cylinder and coaxial with it there is a screw mixer driven by a respective motor. Said machine has a refrigerant circuit comprising a gas compression motor-driven compressor, a condenser connected to the compressor delivery side and an evaporator inside the refrigerant cylinder.

The refrigerant circuit is closed by a pipe connecting the evaporator outfeed with the compressor infeed.

Again as is known, for sterile preservation of the mixture, especially if it contains milk, an at least daily pasteurising cycle must be carried out.

Processes and devices useful for producing frozen foods are disclosed inter alia in US 4 476 146, US 4 607 494, US 4 706 473, EP 59329 and US 3 196 627

For that reason, the refrigerant circuit is completed by a branch connecting the motor-driven compressor outfeed with the evaporator infeed.

There are valve means which can switch between a cooling position, in which the branch is excluded from the refrigerant circuit and the machine is prepared to make crushed-ice drinks, and a heating position in which the condenser is excluded from the circuit.

In the latter conditions the compressed gas supplied by the motor-driven compressor acts as a heating fluid. The heating action lasts until the mixture contained in the tank reaches a pasteurising temperature, that is to say, a temperature which guarantees sterilisation of the mixture, for example a temperature of around 70°C.

When the pasteurising process has finished, before a new production cycle by the machine, the valve means are switched to the position for restoring the refrigerant cycle.

Consequently, the mixture is gradually cooled by the coolant fluid passing through the evaporator, until it reaches a freezing temperature, for example 3 - 4°C, necessary for the formation, under the scraping action of the screw mixer, of those films or granules of ice which are a characteristic component of a crushed-ice drink.

In practice it may be seen that the times taken to pass from the pasteurising temperature to the freezing temperature and the machine operating temperature are extremely long. It should be noticed that during said cooling, for a relatively long time interval the mixture remains at a temperature of around 25 - 30° C, around which it is particularly exposed to the formation of bacterial loads.

Therefore, the present invention has for an aim to overcome the above-mentioned disadvantages by providing a method for pasteurising and restoring the refrigerant cycle and producing a freezing machine for making crushed-ice drinks able to implement the method, capable of reducing the times for cooling the above-mentioned mixture.

Accordingly, the present invention achieves this aim with a method for pasteurising and restoring the refrigerant cycle in a freezing machine for making crushed-ice drinks and the like which has the features described in one or more of the claims from 1 to 8 herein.

The above-mentioned aim is also achieved by a freezing machine for making crushed-ice drinks and the like which has the features described in one or more of the claims from 9 to 18 herein.

The technical features of the invention, in accordance with the afore-mentioned aims, are clearly indicated in the claims herein and the advantages of the invention are more apparent in the detailed description which follows, with reference to the accompanying drawings, which illustrate a preferred embodiment in which:
- Figure 1 is a perspective view of a freezing machine for making crushed-ice drinks and the like in accordance with the present invention;
- Figure 2 is a schematic view of a first embodiment of the machine of Figure 1; and
- Figure 3 is a schematic view of a second embodiment of the machine of Figure 1;
- Figure 4 illustrates a third embodiment of the machine of Figure 1.

With reference to the accompanying drawings, the numeral 1 denotes as a whole a freezing machine for making crushed-ice drinks and the like.

The machine 1 comprises a tank 2 for containing a food mixture usually consisting of a syrup and water or milk. In particular, it should be noticed that the machine 1 disclosed is preferably used for milk-based food mixtures, requiring a regular pasteurising cycle for sterile preservation of the mixture.

Inside the containment tank 2 there is a chamber 2a housing a refrigerant cylinder 3.

The refrigerant cylinder 3 has a substantially horizontal longitudinal extension and is equipped with dispensing means 4 of the known type and therefore not described in detail, designed to distribute the mixture to the outside of the tank 2 in the form of a crushed-ice drink or the like.

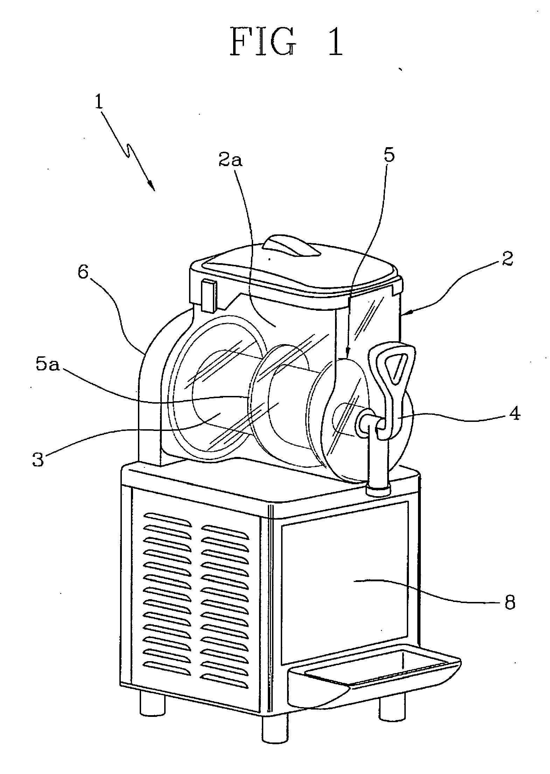

As Figure 1 clearly shows, inside the tank 2 there is a screw mixer 5, of the known type, mounted coaxially with the refrigerant cylinder 3.

In particular, the screw mixer 5 consists of a screw 5a which rotates, driven by a respective motor 6 associated with the mixer 5, about its own longitudinal axis of extension and having an edge substantially in contact with the outer surface of the cylinder 3.

With said rotation the screw 5a mixes the mixture in the tank 2 and scrapes the outer surface of the cylinder 3, promoting the formation of the characteristic "chippings and/or film" consisting of small pieces of crushed ice or films detached from the surface of the cylinder, typical of a crushed-ice drink and similar foodstuffs.

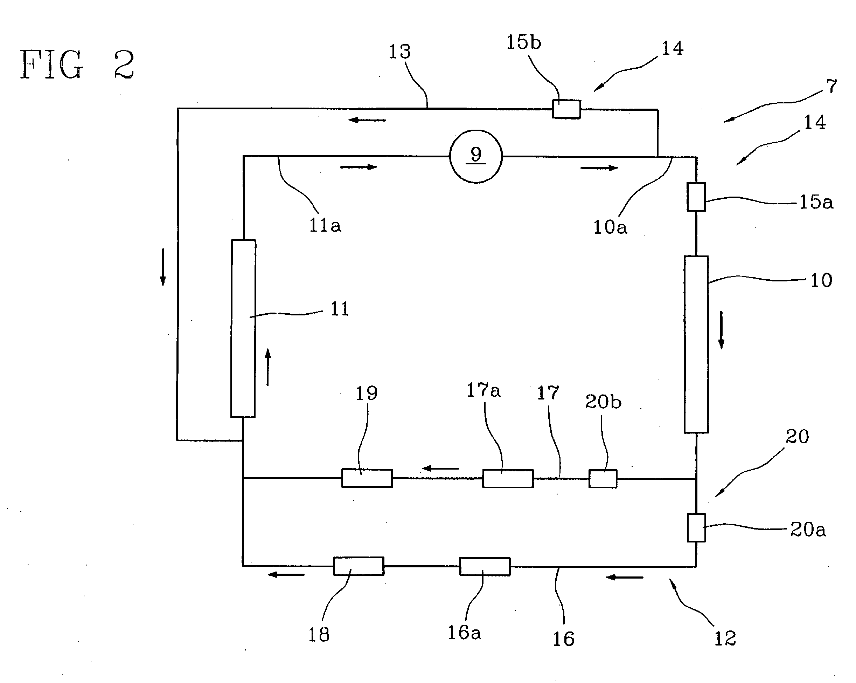

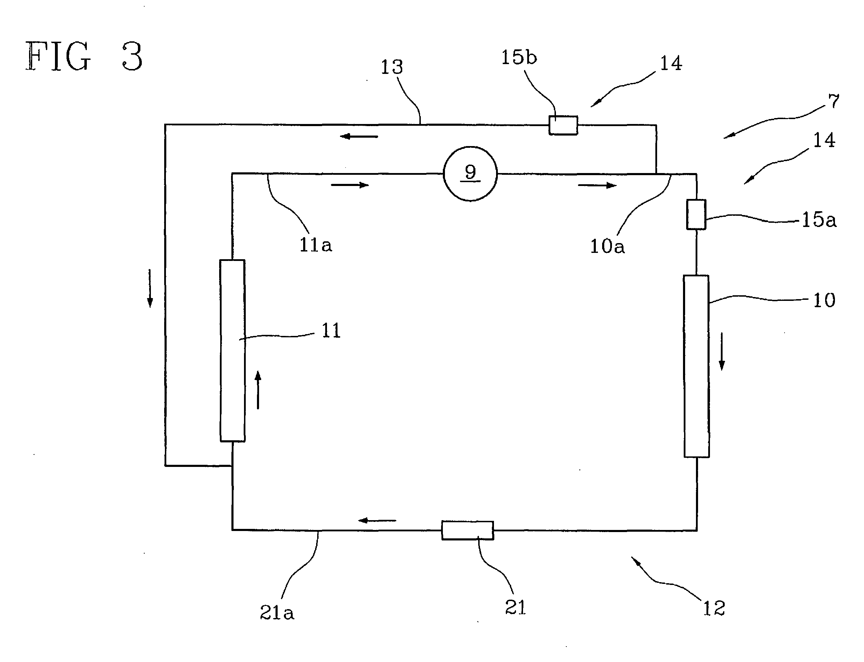

The machine 1 also has a gas compression refrigerant circuit 7, schematically illustrated in Figures 2 and 3, and housed in a box-shaped frame 8 below the tank 2.

The refrigerant circuit 7 comprises a gas compression motor-driven compressor 9, advantageously of the inverter type and with its delivery side connected, by a first pipe 10a, to a condenser 10 of the known type.

The condenser 10 cools the flow of refrigerant gas compressed and fed by the motor-driven compressor 9. The refrigerant circuit 7 also has an evaporator 11 associated with the refrigerant cylinder 3 for heat exchange with the cylinder 3.

The evaporator 11 outfeed is in turn connected by a second pipe 11a with the motor-driven compressor 9 intake.

Moreover, the refrigerant circuit 7 comprises, between the condenser 10 outfeed and the evaporator 11 infeed, means 12 which, depending on the temperature, regulate the flow of coolant fluid, said means described in more detail below.

Between the motor-driven compressor 9 output and the evaporator 11 input there extends a pasteurising branch 13, which, thanks to respective valve means 14 on the branch 13, can exclude the condenser 10 and the means 12 for regulating the flow during a respective pasteurising cycle.

In particular, the valve means 14 have a tap 15a on the first pipe 10a and positioned between the point of connection with the pasteurising branch 13 and the condenser 10 infeed, and a solenoid valve 15b positioned on the pasteurising branch 13.

In this way, during the pasteurising cycle, the solenoid valve 15b is in the open condition and the tap 15a is closed, so that the flow of fluid compressed and supplied by the motor-driven compressor 9 passes through the branch 13.

It should be specified that, in this situation the motor-driven compressor 9 acts as a heat pump to heat the fluid which, as it passes through the evaporator 11, heats the mixture contained in the tank 2.

At the end of the pasteurising cycle the solenoid valve 15b is closed, excluding the branch 13, and the tap 15a is opened, so as to restore the passage of the flow through the condenser 10.

In accordance with the first embodiment illustrated in Figure 2, it should be noticed that the means 12 for regulating the flow of coolant fluid comprise a first, slow cooling branch 16 and second branch 17, parallel with the first, for rapid cooling.

In detail, the first, slow cooling branch 16 has a capillary 18 consisting for example of a throttle valve designed to reduce the fluid flow passage cross-section, so as to slow the passage of the flow. More generally, the first branch 16 consists of a pipe which on average has a passage cross-section less than the passage cross-section of the pipe forming the second branch 17.

Advantageously, the second, rapid cooling branch 17 has a stabiliser valve 19 designed to automatically maintain a constant pressure value for the flow of fluid passing from the condenser 10 to the evaporator 11.

The branches 16 and 17 may also have filters 16a, 17a respectively positioned upstream of the capillary 18 and of the stabiliser valve 19.

The means 12 for regulating the refrigerant flow also have valve means 20 for selecting the cooling branches 16, 17 inserted between the branches between the condenser 10 outfeed and the infeed of the branch 16 and, respectively, the branch 17.

In more detail, the valve means 20 comprise a first solenoid valve 20a associated with the first branch 16 and inserted between the capillary 18 and the condenser 10, and a second solenoid valve 20b associated with the second branch 17 and inserted between the stabiliser valve 19 and the condenser 10.

The solenoid valves 20a, 20b are associated with one another by suitable electronic control and processing elements not illustrated and of the known type, therefore not described.

In this way, during a rapid cooling step the first solenoid valve 20a is closed to prevent the passage of coolant fluid whilst the second solenoid valve 20b allows the passage of the refrigerant flow through the second branch 17 during a first thermal excursion ΔT'.

In contrast, during a subsequent slow cooling step the second solenoid valve 20b is closed and the first solenoid valve 20a allows the passage of the refrigerant flow through the first branch 16 during a second thermal excursion ΔT".

In accordance with a second embodiment illustrated in Figure 3, the means 12 for regulating the refrigerant flow comprise thermostatic valve means 21 positioned along the pipe 21a connecting the condenser 10 and the evaporator 11.

The valve means 21 can be switched between a maximum flow rate operating condition to allow the passage of the refrigerant flow during the first thermal excursion ΔT', and a minimum flow rate operating condition to allow the passage of the refrigerant flow during the second thermal excursion ΔT".

In both embodiments illustrated in Figures 2 and 3, the first thermal excursion ΔT' is greater than the second thermal excursion ΔT" and in both cases the passage from the rapid cooling step to the slow cooling step is controlled by temperature control means not illustrated which are positioned inside the evaporator 11 and connected to the regulator means 12.

In particular, inside the valve means 21 there is a temperature sensor for detecting a first temperature range within which the first thermal excursion ΔT' is defined, and a second temperature range within which the second thermal excursion ΔT" is defined.

In this way, depending on the temperature detected by the above-mentioned sensor, the valve means 21 modify the cross-section for passage of the refrigerant flow. In other words, in the above-mentioned maximum flow rate condition the valve means 21 form a cross-section for passage of the refrigerant flow greater than the cross-section for passage in the minimum flow rate condition.

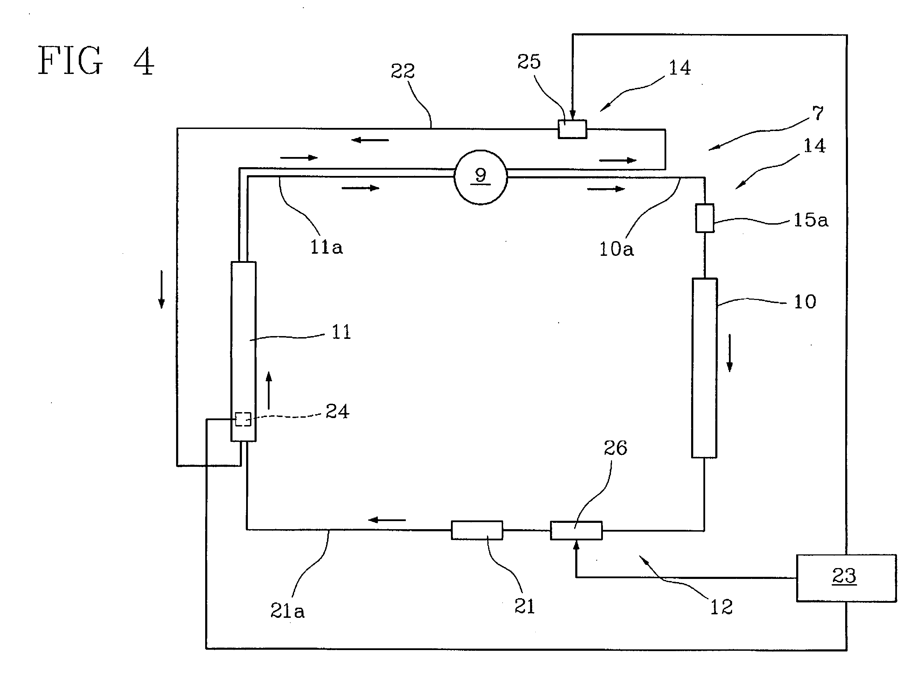

In a third embodiment, illustrated in Figure 4, the pasteurising circuit labelled 22 is independent of the refrigerant circuit 7 along its entire path.

The numeral 23 denotes a control unit controlled by evaporator 11 temperature control means 24 and whose output is connected to valve means 25 and 26, the former positioned on the pasteurising circuit 22 between the motor-driven compressor 9 delivery side and the evaporator 11 and the latter positioned between the condenser 10 and the evaporator 11.

In said embodiment, after the first pasteurising step, during which the fluid passes through the independent pasteurising circuit 22, the rapid cooling step is carried out precisely as seen with reference to the embodiment illustrated in Figure 3. Then, when a predetermined temperature is detected by the control means 24 the control unit 23 issues the command to open the pasteurising circuit 22 valve means 25.

Consequently, a cold fluid through the refrigerant circuit 7 and a hot fluid through the pasteurising circuit 22 simultaneously pass through the evaporator 11.

In other words, a suitable quantity of hot gas taken from the compressor 9 outfeed is introduced into the coolant fluid current entering the evaporator 11 infeed.

In this way, again there is a final step of slow cooling for the formation of the granules and/or films of ice. It should be noticed that the valve means 26 may be of the thermostatic type so that, depending on the temperature, they suitably dose the coolant fluid flow.

Finally, in accordance with the present invention, the heating of the food mixture to be subjected to heat treatment is achieved through the use of a secondary fluid, independent of the compressor 9, which transfers to the mixture the heat produced by heating elements which may consist, for example, of pipes carrying a flow of a hot primary fluid or suitable electric heating elements.

As already indicated, the present invention relates both to a machine and to a method for pasteurising and restoring the refrigerant cycle implemented by the machine 1 described above.

The method comprises a pasteurising step during which a predetermined maximum temperature T1 is reached.

As indicated above, said pasteurising step is implemented through the pasteurising branch 13 which excludes the condenser 10 and the regulator means 12.

In this way, the flow of fluid is heated directly by the motor-driven compressor 9 and fed through the branch 13 to the evaporator 11 infeed.

Consequently, the flow of fluid heats the food mixture for a predetermined period then is returned towards the motor-driven compressor 9 infeed. Advantageously, the maximum temperature T1 is around 65 - 70°C and is maintained for around 30 minutes (low-temperature pasteurisation).

Alternatively, the pasteurising step may be performed without a maintained time, but simply when the maximum temperature T1 is reached, which in this case is around 85°C (high-temperature pasteurisation).

After the pasteurising step, before the new production cycle by the machine, a step of restoring the refrigerant cycle is implemented, during which a predetermined freezing or operating temperature T3 is reached, essential for the formation of the crushed-ice drink.

The step of restoring the refrigerant cycle comprises a sub-step of rapid cooling of the pasteurising temperature with a first thermal excursion ΔT', passing from the maximum temperature T1 to a temperature T2, then a sub-step of slow cooling from the temperature T2 to the above-mentioned freezing temperature T3 with a second thermal excursion ΔT".

In this situation it should be noticed that the first thermal excursion ΔT' is greater than the second thermal excursion ΔT" and takes less time than the second thermal excursion ΔT".

Preferably, by way of example only, it should be noticed that the first thermal excursion ΔT' takes between 50 and 70 minutes, whilst the second thermal excursion ΔT" takes between 60 and 120 minutes.

Moreover, it is important to consider that the temperature T2 is a temperature close to the freezing temperature T3 or operating temperature.

The temperature T2 is preferably around 4°C whilst the freezing temperature T3 is around -2°C /- 3°C.

Therefore, it should be noticed that the first thermal excursion ΔT' causes a rapid lowering of the temperature from the maximum pasteurising temperature T1 to the temperature T2. Said rapid thermal excursion drastically reduces the time for which critical temperatures are maintained (usually between 25 and 30°C), during which the food mixture is particularly exposed to the formation of bacterial loads.

Moreover, it should be noticed that the second thermal excursion ΔT" promotes the formation of the characteristic "chippings" consisting of small pieces of crushed ice and/or films, typical of crushed-ice drinks and similar foodstuffs.

In accordance with the first embodiment described above and illustrated in Figure 2, the rapid cooling sub-step is implemented with a step of selecting the second branch 17 in which the first branch 16 is excluded to allow the passage of the coolant fluid flow only in the second branch 17.

Then the slow cooling sub-step is implemented with a step of selecting the first branch 16 and exclusion of the second branch 17.

As indicated above, the second branch 17 has a cross-section for passage of the fluid that is greater than the passage cross-section of the first branch 16. Therefore, when the fluid flow passes through the second branch 17 its speed is greater than the speed of the same flow along the first branch 16.

It should also be noticed that the capillary 18 reduces the coolant fluid flow to implement the second thermal excursion ΔT".

The steps of selecting the branches 16 and 17 are implemented using the selection valve means 20 which are calibrated in such a way as to determine the fluid flow path according to the temperature of the flow.

In accordance with the second embodiment illustrated in Figure 3, the slow cooling sub-step is implemented by reducing the cross-section for passage of the coolant fluid flow compared with the cross-section for passage of the flow during the rapid cooling sub-step.

In other words, the cross-section of the connecting pipe 21a is modified by the thermostatic valve means 21 to regulate the fluid flow according to the temperature detected by the temperature sensor.

In this way, at the end of the first thermal excursion ΔT' the valve means 21 reduce the cross-section for passage of the coolant fluid flow to start the second thermal excursion ΔT" which, as already indicated, is less than the first thermal excursion ΔT'.

The invention described above is susceptible of industrial application.

## Claims

1. A method for pasteurising and restoring the refrigerant cycle in a freezing machine for making crushed-ice drinks and the like, the freezing machine comprising a refrigerant circuit (7) comprising an evaporator (11) associated with a tank (2) for containing a food mixture, a condenser (10), a motor-driven compressor (9), a pasteurising circuit (13; 22) connecting the delivery side of the motor-driven compressor (9) and the evaporator (11), the method comprising a pasteurising step during which a predetermined maximum temperature (T1) is reached and a step of restoring the refrigerant cycle, during which a predetermined freezing and operating temperature (T3) is reached; the method being **characterised in that** the step of restoring the refrigerant cycle comprises a first sub-step of rapid cooling from the temperature (T1) to a temperature (T2) and a second sub-step lasting longer than the first, of slow cooling from the temperature (T2) to the freezing temperature (T3) with a thermal excursion (ΔT"), the first thermal excursion (ΔT') being greater than the second thermal excursion (ΔT").

2. The method according to claim 1, **characterised in that** the passage from the first to the second sub-step is consequent to an operation controlling the food mixture in the evaporator (11).

3. The method according to claim 1 and/or 2, **characterised in that** the second, slow cooling sub-step corresponds to a respective predetermined coolant fluid flow value and **in that** the first, rapid cooling sub-step corresponds to a respective predetermined coolant fluid value, the coolant fluid flow value relative to the first sub-step being greater than the coolant fluid flow value relative to the second sub-step.

4. The method according to any of the foregoing claims from 1 to 3, **characterised in that** the slow cooling sub-step is carried out by means of a step of selecting a first cooling branch (16) through which a coolant fluid flow is passed; and **in that** the rapid cooling sub-step is carried out by means of a step of selecting a second cooling branch (17) through which the coolant fluid flow is made to pass; the second branch (17) consisting of a pipe on average having a passage cross-section greater than that of the pipe forming the first branch (16).

5. The method according to any of the foregoing claims from 1 to 3, **characterised in that** the passage between the first and the second sub-steps occurs using thermostatic valve means (21).

6. The method according to claim 4, **characterised in that** the steps of selecting the branches (16, 17) are implemented by selection valve means (20) for regulating the coolant fluid flow according to the temperature.

7. The method according to claim 1 or 2, **characterised in that** the pasteurising circuit (22) is independent of the refrigerant circuit (7), the slow cooling sub-step being obtained by simultaneous passage through the evaporator (11) of a coolant fluid which circulates along the refrigerant circuit and a heating fluid which circulates along the pasteurising circuit (22).

8. The method according to one or more of the foregoing claims, **characterised in that** the first thermal excursion (ΔT') takes between 50 and 70 minutes, whilst the second thermal excursion (ΔT") takes between 60 and 120 minutes.

9. A freezing machine for making crushed-ice drinks and the like, comprising a freezing cylinder (3) equipped with dispenser means (4) housed in a tank (2) for containing a food mixture, a screw mixer (5) driven by a respective motor (6) and mounted coaxially with the refrigerant cylinder (3), a gas compression refrigerant circuit (7) comprising a motor-driven compressor (9), an evaporator (11) associated with the freezing cylinder (3) and a condenser (10) between the motor-driven compressor (9) and the evaporator (11), a pasteurising circuit (13; 22) connecting the motor-driven compressor (9) outfeed and the evaporator (11) infeed, the machine being **characterised in that** the refrigerant circuit (7) comprises temperature sensor means in the evaporator (11) controlling first valve means (16a, 17a, 20, 21) forming regulator means (12) for the refrigerant flow for performing a first sub-step of rapid cooling from a temperature (T1) to a temperature (T2) and a second sub-step lasting longer than the first, of slow cooling from the temperature (T2) to a freezing temperature (T3) with a thermal excursion (ΔT"), the first thermal excursion (ΔT') being greater than the second thermal excursion (ΔT"), said sensor means in the evaporator (11) further controlling valve means (15b, 25) on the pasteurising circuit (13, 22).

10. The machine according to claim 9, **characterised in that** the refrigerant flow regulator means (12) consist of thermostatic valve means (21) positioned along the pipe (21a) connecting the condenser (10) and the evaporator (11).

11. The machine according to claim 10, **characterised in that** the valve means (21) can switch between a maximum flow rate operating condition to allow the passage of the refrigerant flow during a first thermal excursion (ΔT') and a minimum flow rate operating condition to allow the passage of the refrigerant flow during a second thermal excursion (ΔT"); the first thermal excursion (ΔT') being greater than the second thermal excursion (ΔT").

12. The machine according to claim 11, **characterised in that** the maximum flow rate condition of the valve means (21) forms a cross-section for passage of the coolant fluid flow greater than the cross-section for passage in the minimum flow rate condition.

13. The machine according to claim 11 and/or 12, **characterised in that** the valve means (21) comprise a temperature sensor for detecting a first temperature range, forming the first thermal excursion (ΔT'), between a predetermined maximum temperature (T1) and a temperature (T2), and a second temperature range, forming the second thermal excursion (ΔT"), between the temperature (T2) and a predetermined freezing temperature (T3).

14. The machine according to claim 9, **characterised in that** the refrigerant flow regulator means (12) comprise, between the condenser (10) and the evaporator (11), a first, slow cooling branch (16) comprising at least a throttle capillary (18) and a second, rapid cooling branch (17), positioned parallel with the first branch (16).

15. The machine according to claim 14, **characterised in that** the second branch (17) consists of a pipe which on average has a passage cross-section greater than that of the pipe forming the first branch (16).

16. The machine according to claim 14 and/or 15, **characterised in that** the refrigerant flow regulator means (12) also comprise valve means (20) for selecting the cooling branches (16, 17), the valve means being inserted between the cooling branches (16, 17) themselves and the condenser (10) outfeed.

17. The machine according to claim 16, **characterised in that** the selection valve means (20) comprise a first solenoid valve (20a) associated with the first branch (16) and a second solenoid valve (20b) associated with the second branch (17); the first and second solenoid valves (20a, 20b) being able to switch, operating in conjunction with one another, between a rapid cooling condition in which they enable the second branch (17) and disable the first branch (16) to allow the passage of the refrigerant flow during a first thermal excursion (ΔT'), and a slow cooling condition in which they enable the first branch (16) and disable the second branch (17) to allow the passage of the refrigerant flow during a second thermal excursion (ΔT").

18. The machine according to claim 9, **characterised in that** the pasteurising circuit (22) is a circuit independent of the refrigerant circuit (7); the machine comprising means (23) for controlling the valve means (25, 26) positioned respectively along the pasteurising circuit and along the refrigerant circuit (7) so as to allow, when the temperature is detected during the slow cooling step, the simultaneous passage through the evaporator (11) of a coolant fluid which circulates along the refrigerant circuit and a heating fluid which circulates along the pasteurising circuit (22).

## Patentansprüche

1. Verfahren zur Pasteurisierung und Wiederherstellung des Kühlzyklus in einer Gefriermaschine zur Herstellung von Drinks mit zerkleinertem Eis und Ähnlichem, wobei die Gefriermaschine einen Kältekreislauf (7), der einen mit einem Behälter (2) verbundenen Verdampfer (11) umfasst, um eine Nahrungsmittelmischung zu enthalten, einen Verflüssiger (10), einen mit Motor betriebenen Verdichter (9) und einen Pasteurisierkreislauf (13, 22) umfasst, der die Austrittsseite des mit Motor betriebenen Verdichters (9) und den Verdampfer (11) verbindet, wobei das Verfahren eine Pasteurisierphase umfasst, während derer eine vorgegebene Höchsttemperatur (T1) erreicht wird, und eine Phase zur Wiederherstellung des Kühlzyklus, während derer eine vorgegebene Gefrier- und Betriebstemperatur (T3) erreicht wird; das Verfahren ist **dadurch gekennzeichnet, dass** die Phase der Wiederherstellung des Kühlzyklus eine erste Unterphase der schnellen Abkühlung von der Temperatur (T1) zu einer Temperatur (T2) und eine zweite Unterphase umfasst, die länger als die erste dauert und die das langsame Abkühlen von der Temperatur (T2) zur Gefriertemperatur (T3) mit einer Temperaturschwankung (ΔT") betrifft, wobei die erste Temperaturschwankung (ΔT') größer ist als die zweite Temperaturschwankung (ΔT").

2. Verfahren nach Anspruch 1, **dadurch gekennzeichnet, dass** der Übergang von der ersten zur zweiten Unterphase auf eine Betriebskontrolle der Nahrungsmittelmischung im Verdampfer (11) folgt.

3. Verfahren nach Anspruch 1 und/oder 2, **dadurch gekennzeichnet, dass** die zweite, langsam abkühlende Unterphase einem jeweiligen vorgegebenen Kältemittelflusswert entspricht und dass die erste, schnell abkühlende Unterphase einem jeweiligen vorgegebenen Kältemittelflusswert entspricht, wobei der Kältemittelflusswert bezüglich der ersten Unterphase größer ist als der Kältemittelflusswert bezüglich der zweiten Unterphase.

4. Verfahren nach einem der vorhergehenden Ansprüche 1 bis 3, **dadurch gekennzeichnet, dass** die langsam abkühlende Unterphase mittels einer Phase des Auswählens eines ersten Kühlabschnitts (16) erfolgt, durch den ein Kältemittelfluss geleitet wird und dass die schnelle abkühlende Unterphase mittels einer Phase des Auswählens eines zweiten Kühlabschnitts (17) erfolgt, durch den der Kältemittelfluss geleitet wird, wobei der zweite Abschnitt (17) aus einem Rohr besteht, dass im Durchschnitt einen Durchströmungsquerschnitt besitzt, der größer ist als der des Rohrs, das den ersten Abschnitt (16) bildet.

5. Verfahren nach einem der vorhergehenden Ansprüche 1 bis 3, **dadurch gekennzeichnet, dass** der Übergang zwischen der ersten und der zweiten Unterphase unter Nutzung von thermostatischen Ventilmitteln (21) erfolgt.

6. Verfahren nach Anspruch 4, **dadurch gekennzeichnet, dass** die Phasen des Auswählens der Abschnitte (16, 17) durch Auswahlventilmittel (20) zum Regeln des Kältemittelflusses nach der Temperatur implementiert wird.

7. Verfahren nach Anspruch 1 oder 2, **dadurch gekennzeichnet, dass** der Pasteurisierkreislauf (22) unabhängig vom Kältekreislauf (7) ist, wobei die langsam abkühlende Unterphase durch das simultane Strömen eines Kältemittels, das entlang des Kältekreislaufs zirkuliert, und eines Heizmittels, das entlang des Pasteurisierkreislaufs (22) zirkuliert, durch den Verdampfer (11) erzielt wird.

8. Verfahren nach einem oder mehreren der vorhergehenden Ansprüche, **dadurch gekennzeichnet, dass** die erste Temperaturschwankung (ΔT') 50 bis 70 Minuten dauert, während die zweite Temperaturschwankung (ΔT") 60 bis 120 Minuten dauert.

9. Gefriermaschine zur Herstellung von Drinks mit zerkleinertem Eis und Ähnlichem, umfassend einen Gefrierzylinder (3), ausgestattet mit Ausgabemitteln (4), untergebracht in einem Behälter (2) zum Enthalten einer Nahrungsmittelmischung, einen Schraubenmixer (5), angetrieben durch einen jeweiligen Motor (6) und montiert koaxial zum Kühlzylinder (3), einen Gaskompressionskältekreislauf (7), umfassend einen mit Motor betriebenen Verdichter (9), einen Verdampfer (11), verbunden mit dem Gefrierzylinder (3) und einen Verflüssiger (10) zwischen dem mit Motor betriebenen Verdichter (9) und dem Verdampfer (11), einen Pasteurisierkreislauf (13, 22), der den Auslauf des mit Motor betriebenen Verdichters (9) und den Einlauf des Verdampfers (11) verbindet, wobei die Maschine **dadurch gekennzeichnet ist, dass** der Kältekreislauf (7) Temperaturfühlermittel im Verdampfer (11) umfasst, die erste Ventilmittel (16a, 17a, 20, 21), die Reguliermittel (12) bilden, steuern, damit der Kältemittelfluss eine erste Unterphase der schnellen Abkühlung von einer Temperatur (T1) zu einer Temperatur (T2) und eine zweite Unterphase durchführt, die länger dauert als die erste und das langsame Abkühlen der Temperatur (T2) auf eine Gefriertemperatur (T3) mit einer Temperaturschwankung (ΔT") betrifft, wobei die erste Temperaturschwankung (ΔT') größer ist als die zweite Temperaturschwankung (ΔT"), wobei die genannten Fühlermittel im Verdampfer (11) zudem Ventilmittel (15b, 25) am Pasteurisierkreislauf (13, 22) steuern.

10. Maschine nach Anspruch 9, **dadurch gekennzeichnet, dass** die Kältemittelflussreguliermittel (12) aus thermostatischen Ventilmitteln (21) bestehen, die am Rohr (21a), das den Verflüssiger (10) mit dem Verdampfer (11) verbindet, positioniert sind.

11. Maschine nach Anspruch 10, **dadurch gekennzeichnet, dass** die Ventilmittel (21) zwischen einem Betriebszustand der maximalen Durchflussmenge, um das Durchströmen des Kältemittelflusses während einer ersten Temperaturschwankung (ΔT') zu erlauben, und einem Betriebszustand der minimalen Durchflussmenge umschalten können, um das Durchströmen des Kältemittelflusses während einer zweiten Temperaturschwankung (ΔT") zu erlauben, wobei die erste Temperaturschwankung (ΔT') größer ist als die zweite Temperaturschwankung (ΔT").

12. Maschine nach Anspruch 11, **dadurch gekennzeichnet, dass** der Zustand der maximalen Durchflussmenge der Ventilmittel (21) einen Querschnitt für das Durchströmen des Kältemittelflusses bildet, der größer ist als der Querschnitt für das Durchströmen im Zustand der minimalen Durchflussmenge.

13. Maschine nach Anspruch 11 und/oder 12, **dadurch gekennzeichnet, dass** die Ventilmittel (21) einen Temperaturfühler zum Erfassen eines ersten Temperaturbereichs, bildend die erste Temperaturschwankung (ΔT'), zwischen einer vorgegebenen Höchsttemperatur (T1) und einer Temperatur (T2), und eines zweiten Temperaturbereichs, bildend die zweite Temperaturschwankung (ΔT"), zwischen der Temperatur (T2) und einer vorgegebenen Gefriertemperatur (T3), umfassen.

14. Maschine nach Anspruch 9, **dadurch gekennzeichnet, dass** die Kältemittelflussreguliermittel (12) zwischen dem Verflüssiger (10) und dem Verdampfer (11) einen ersten langsam abkühlenden Abschnitt (16) umfassen, umfassend mindestens ein Drosselkapillarrohr (18), und einen zweiten schnell abkühlenden Abschnitt (17), der parallel zum ersten Abschnitt (16) angeordnet ist.

15. Maschine nach Anspruch 14, **dadurch gekennzeichnet, dass** der zweite Abschnitt (17) aus einem Rohr besteht, das im Durchschnitt einen Durchströmungsquerschnitt aufweist, der größer ist als der des Rohrs, das den ersten Abschnitt (16) bildet.

16. Maschine nach Anspruch 14 und/oder 15, **dadurch gekennzeichnet, dass** die Kältemittelflussreguliermittel (12) auch Ventilmittel (20) zum Auswählen der Kühlabschnitt (16, 17) umfassen, wobei die Ventilmittel zwischen den Kühlabschnitten (16, 17) und dem Auslauf des Verflüssigers (10) eingesetzt sind.

17. Maschine nach Anspruch 16, **dadurch gekennzeichnet, dass** die Auswahlventilmittel (20) ein erstes Magnetventil (20a) umfassen, verbunden mit dem ersten Abschnitt (16), und ein zweites Magnetventil (20b), verbunden mit dem zweiten Abschnitt (17), wobei das erste und das zweite Magnetventil (20a, 20b) in Verbindung miteinander arbeitend in der Lage sind, zwischen einem schnell abkühlenden Zustand, in dem sie den zweiten Abschnitt (17) aktivieren und den ersten Abschnitt (16) deaktivieren, um das Durchströmen des Kältemittelflusses während einer ersten Temperaturschwankung (ΔT') zu erlauben, und einem langsam abkühlenden Zustand, in dem sie den ersten Abschnitt (16) aktivieren und den zweiten Abschnitt (17) deaktivieren, um das Durchströmen des Kältemittelflusses während einer zweiten Temperaturschwankung (ΔT") zu erlauben, umzuschalten.

18. Maschine nach Anspruch 9, **dadurch gekennzeichnet, dass** der Pasteurisierkreislauf (22) ein vom Kältekreislauf (7) unabhängiger Kreislauf ist, wobei die Maschine Mittel (23) zum Steuern der Ventilmittel (25, 26) umfasst, die jeweils entlang des Pasteurisierkreislaufs und entlang des Kältekreislaufs (7) positioniert sind, sodass das simultane Strömen eines Kältemittels, das entlang des Kältekreislaufs zirkuliert, und eines Heizmittels, das entlang des Pasteurisierkreislaufs (22) zirkuliert, durch den Verdampfer (11) ermöglicht wird, wenn die Temperatur während der langsam abkühlenden Phase erfasst wird.

## Revendications

1. Procédé de pasteurisation et de restauration du cycle réfrigérant dans un appareil de congélation pour fabriquer des boissons à base de glace pilée et similaires, l'appareil de congélation comprenant un circuit réfrigérant (7) comprenant un évaporateur (11) associé à un réservoir (2) pour contenir un mélange nutritif, un condensateur (10), un compresseur motorisé (9), un circuit de pasteurisation (13 ; 22) reliant le côté d'évacuation du compresseur motorisé (9) et l'évaporateur (11), le procédé comprenant une étape de pasteurisation durant laquelle une température maximum préétablie (T1) est atteinte et une étape de restauration du cycle réfrigérant, pendant laquelle une température de service et de congélation (T3) préétablie est atteinte ; le procédé étant **caractérisé en ce que** l'étape de restauration du cycle réfrigérant comprend une première sous-étape de refroidissement rapide de la température (T1) à une température (T2) et une seconde sous-étape, durant plus longtemps que la première, de refroidissement lent de la température (T2) à la température de congélation (T3) avec une excursion thermique (ΔT"), la première excursion thermique (ΔT') étant supérieure à la seconde excursion thermique (ΔT").

2. Procédé selon la revendication 1, **caractérisé en ce que** le passage de la première à la seconde sous-étape fait suite à une opération contrôlant le mélange nutritif dans l'évaporateur (11).

3. Procédé selon les revendications 1 et/ou 2, **caractérisé en ce que** la seconde sous-étape de refroidissement lent correspond à une valeur de débit de liquide de refroidissement respective prédéterminée et **en ce que** la première sous-étape de refroidissement rapide correspond à une valeur de liquide de refroidissement respective prédéterminée, la valeur de débit du liquide de refroidissement relative à la première sous-étape étant supérieure à la valeur de débit de liquide de refroidissement relative à la seconde sous-étape.

4. Procédé selon l'une quelconque des revendications précédentes de 1 à 3, **caractérisé en ce que** la sous-étape de refroidissement lent est réalisée par le biais d'une étape de sélection d'une première branche de refroidissement (16) à travers laquelle un flux de liquide de refroidissement circule ; et **caractérisé en ce que** la sous-étape de refroidissement rapide est réalisée par le biais d'une étape de sélection d'une seconde branche de refroidissement (17) à travers laquelle le flux de liquide de refroidissement doit circuler ; la seconde branche (17) consistant en un conduit qui possède en moyenne une section transversale de passage plus grande que celle du conduit formant la première branche (16).

5. Procédé selon l'une quelconque des revendications précédentes de 1 à 3, **caractérisée en ce que** le passage entre les premières et secondes sous-étapes s'effectue en utilisant des moyens à vannes thermostatiques (21).

6. Procédé selon la revendication 4, **caractérisé en ce que** les étapes de sélection des branches (16, 17) sont exécutées par des moyens à vannes de sélection (20) pour régler le flux de liquide de refroidissement en fonction de la température.

7. Procédé selon les revendications 1 ou 2, **caractérisé en ce que** le circuit de pasteurisation (22) est indépendant du circuit réfrigérant (7), la sous-étape de refroidissement lent étant obtenue par passage simultané à travers l'évaporateur (11) d'un liquide de refroidissement qui circule le long du circuit réfrigérant et d'un fluide chauffant circulant le long du circuit de pasteurisation (22).

8. Procédé selon une ou plusieurs des revendications précédentes, **caractérisé en ce que** la première excursion thermique (ΔT') dure entre 50 et 70 minutes, pendant que la seconde excursion thermique (ΔT") dure entre 60 et 120 minutes.

9. Appareil de congélation pour fabriquer des boissons à base de glace pilée et similaires, comprenant un cylindre de congélation (3) équipé de moyens de distribution (4) logés dans un réservoir (2) pour contenir un mélange nutritif, un mélangeur à vis (5) entraîné par un moteur respectif (6) et monté coaxialement au cylindre réfrigérant (3), un circuit réfrigérant à gaz compressé (7) comprenant un compresseur motorisé (9), en évaporateur (11) associé au cylindre de congélation (3) et un condensateur (10) situé entre le compresseur motorisé (9) et l'évaporateur (11), un circuit de pasteurisation (13 ; 22) reliant la sortie du compresseur motorisé (9) et l'entrée de l'évaporateur (11), l'appareil étant **caractérisé en ce que** le circuit réfrigérant (7) comprend des moyens de détection de température dans l'évaporateur (11) contrôlant les premiers moyens à vannes (16a, 17a, 20, 21) formant les moyens de régulation (12) du flux réfrigérant afin de réaliser une première sous-étape de refroidissement rapide d'une température (T1) à une température (T2) et une seconde sous-étape, durant plus longtemps que la première, de refroidissement lent de la température (T2) à une température de congélation (T3) avec une excursion thermique (ΔT''), la première excursion thermique (ΔT') étant plus importante que la seconde excursion thermique (ΔT"), lesdits moyens de détection dans l'évaporateur (11) contrôlant de plus les moyens à vannes (15b, 25) sur le circuit de pasteurisation (13, 22) .

10. Appareil selon la revendication 9, **caractérisé en ce que** les moyens de régulation du flux réfrigérant (12) consistent en des moyens à vannes thermostatiques (21) positionnés le long du conduit (21a) reliant le condensateur (10) et l'évaporateur (11).

11. Appareil selon la revendication 10, **caractérisé en ce que** les moyens à vannes (21) peuvent passer d'une condition de service de débit maximum pour permettre le passage du flux réfrigérant lors d'une première excursion thermique (ΔT') à une condition de service de débit minimum pour permettre le passage du flux réfrigérant lors d'une seconde excursion thermique (ΔT") ; la première excursion thermique (ΔT') étant plus grande que la seconde excursion thermique (ΔT").

12. Appareil selon la revendication 11, **caractérisé en ce que** la condition de débit maximum des moyens à vannes (21) forme une section transversale permettant le passage du flux de liquide réfrigérant plus grande que la section transversale permettant le passage dans la condition de débit minimum.

13. Appareil selon les revendications 11 et/ou 12, **caractérisé en ce que** les moyens à vannes (21) comprennent un détecteur de température pour détecter une première série de températures, formant la première excursion thermique (ΔT') , entre une température maximum préétablie (T1) et une température (T2), et une seconde série de températures, formant la seconde excursion thermique (ΔT"), entre la température (T2) et une température de congélation préétablie (T3).

14. Appareil selon la revendication 9, **caractérisé en ce que** les moyens de régulation du flux réfrigérant (12) comprennent, entre le condensateur (10) et l'évaporateur (11), une première branche de refroidissement lent (16) comprenant au moins un tube capillaire avec étrangleur (18) et une seconde branche de refroidissement rapide (17), positionnée parallèlement à la première branche (16).

15. Appareil selon la revendication 14, **caractérisé en ce que** la seconde branche (17) consiste en un conduit qui possède en moyenne une section transversale de passage plus grande que celle du conduit formant la première branche (16).

16. Appareil selon les revendications 14 et/ou 15, **caractérisé en ce que** les moyens de régulation du flux réfrigérant (12) comprennent aussi des moyens à vannes (20) pour sélectionner les branches de refroidissement (16, 17), les moyens à vannes étant insérés entre les branches de refroidissement (16, 17) elles-mêmes et la sortie du condensateur (10).

17. Appareil selon la revendication 16, **caractérisé en ce que** les moyens à vanne de sélection (20) comprennent une première électrovanne (20a) associée à la première branche (16) et une seconde électrovanne (20b) associée à la seconde branche (17) ; les première et seconde électrovannes (20a, 20b) étant capable de passer, en fonctionnant conjointement l'une avec l'autre, entre une condition de refroidissement rapide dans laquelle elles activent la seconde branche (17) et désactivent la première branche (16) pour permettre le passage du flux réfrigérant lors de la première excursion thermique (ΔT'), et une condition de refroidissement lent dans laquelle elles activent la première branche (16) et désactivent la seconde branche (17) pour permettre le passage du flux réfrigérant lors de la seconde excursion thermique (ΔT").

18. Appareil selon la revendication 9, **caractérisé en ce que** le circuit de pasteurisation (22) est un circuit indépendant du circuit réfrigérant (7) ; l'appareil comprenant des moyens (23) pour contrôler les moyens à vannes (25, 26) positionnés respectivement le long du circuit de pasteurisation et le long du circuit réfrigérant (7) pour permettre ainsi, lorsque la température est détectée lors de l'étape de refroidissement lent, le passage simultané à travers l'évaporateur (11) d'un liquide de refroidissement qui circule le long du circuit réfrigérant et d'un fluide chauffant circulant le long du circuit de pasteurisation (22).
